# EUROPÄISCHE PATENTANMELDUNG

(11) **EP 4 156 479 A1**
(43) Veröffentlichungstag der Anmeldung: **29.03.2023**
(21) Anmeldenummer: 21199148.4
(22) Anmeldetag: 27.09.2021
(51) Int. Cl.: H02M 1/00, H02M 7/493, H02J 3/38

(54) **STEUEREINHEIT UND VERFAHREN FÜR EINEN UMRICHTER**

(71) Anmelder: Wobben Properties GmbH, 26607 Aurich (DE)
(72) Erfinder: Giengiel, Wojciech, 26607 Aurich (DE); Warsinski, Johannes, 26624 Südbrookmerland (DE)
(74) Vertreter: Eisenführ Speiser

(57) **Zusammenfassung**

Die vorliegende Erfindung betrifft eine Steuereinheit (1000) für einen Umrichter (130), bevorzugt eines Leistungsumrichters einer Windenergieanlage (100), insbesondere eines aktiven Gleichrichters eines Leistungsumrichters einer Windenergieanlage (100), umfassend: ein Primär-Steuermodul (1100) zum Vorgeben eines Sollwertes (p1) für den Umrichter (200), ein erstes Sekundär-Steuermodul (1200) zum Ansteuern des Umrichters (130), insbesondere eines ersten Umrichtermoduls (130') des Umrichters (130), das dazu eingerichtet, ein erstes Steuersignal (S1) in Abhängigkeit des Sollwertes (p1) zu erzeugen; ein zweites Sekundär-Steuermodul (1300) zum Ansteuern des Umrichters (130), insbesondere eines zweiten Umrichtermoduls (130") des Umrichters (130), welches zum ersten Umrichtermodul (130') parallel verschaltet ist, das dazu eingerichtet ist, ein zweites Steuersignal (S2) in Abhängigkeit des ersten Steuersignales (S1) zu erzeugen.

## Beschreibung

Die vorliegende Erfindung betrifft eine Steuereinheit für einen Umrichter sowie ein Verfahren zum Steuern eines Umrichters und eine, eine solchen Umrichter aufweisende Windenergieanlage.

Im Bereich der Erzeuger elektrischer Energie, insbesondere bei Windenergie- oder Photovoltaikanlagen, ist es üblich, mehrere Umrichter bzw. Umrichtermodule bzw. Umrichtersubmodule zu einem Umrichtersystem parallel zusammen zu schalten, um die Gesamtleistung der Vorrichtung als solches zu erhöhen.

Um Oberschwingungen, Stromripple oder Spannungseinbrüche, bspw. im Gleichspannungszwischenkreis, zu verhindern, müssen Maßnahmen ergriffen werden, die zugleich nicht der Leistungsabgabe des Umrichtersystems qualitativ oder quantitativ entgegenstehen.

Beim Steuern von Umrichtersystemen sind also eine Vielzahl von Kriterien zu berücksichtigen, wie bspw. die Einhaltung von Grenzwerten für die Zwischenkreisspannung, potentielle Ringströme oder netzseitige Anforderungen.

Nachteilig bei bisher bekannten Verfahren ist, dass es bei größeren Umrichtersystemen zu breitbandigem Rauschen kommen kann. Dies bedeutet insbesondere, dass der, durch das Umrichtersystem in einem Generator erzeugte Strom und/oder erzeugte Magnetfeld einen Ripple in einem breiten Frequenzband aufweist, was zu Leistungsverlust oder Störgeräuschen im Generator führen kann.

Aufgabe der vorliegenden Erfindung ist es daher, wenigstens eines der obengenannten Probleme zu adressieren. Insbesondere soll ein Verfahren zum Steuern von Umrichtern, insbesondere von aktiven Gleichrichtern, bereitgestellt werden, welches auch bei mehreren parallelen Umrichtern zu einem geringeren Ripple im Magnetfeld des Generators und somit zu geringen Kraftschwankungen im Luftspalt des Generators führt.

Erfindungsgemäß wird somit eine Steuereinheit für einen Umrichter vorgeschlagen, bevorzugt für einen Leistungsumrichter einer Windenergieanlage, insbesondere eines aktiven Gleichrichters eines Leistungsumrichters einer Windenergieanlage, umfassend ein Primär-Steuermodul zum Vorgeben eines Sollwertes für den Umrichter, ein erstes Sekundär-Steuermodul zum Ansteuern des Umrichters, insbesondere eines ersten Umrichtermoduls des Umrichters, das dazu eingerichtet ist, ein erstes Steuersignal in Abhängigkeit des Sollwertes zu erzeugen; ein zweites Sekundär-Steuermodul zum Ansteuern des Umrichters, insbesondere eines zweiten Umrichtermoduls des Umrichters, welches zum ersten Umrichtermodul parallel verschaltet ist, dazu eingerichtet, ein zweites Steuersignal in Abhängigkeit des ersten Steuersignales zu erzeugen.

Es wird also insbesondere eine Steuereinheit für einen Umrichter, insbesondere für einen aktiven Gleichrichter, einer Windenergieanlage vorgeschlagen.

Der Umrichter ist bspw. als Leistungsumrichter einer Windenergieanlage ausgebildet, d.h. insbesondere, dass der Umrichter mit dem Generator der Windenergieanlage verbunden ist und der vom Generator der Windenergieanlage erzeugte Strom über den Umrichter geführt wird.

Bevorzugt umfasst der Umrichter wenigstens einen aktiven Gleichrichter, der mit dem Generator der Windenergieanlage verbunden ist und einen Wechselrichter, der mit dem aktiven Gleichrichter und einem elektrischen Versorgungsnetz verbunden ist.

Bevorzugt ist der Leistungsumrichter als Vollumrichter ausgebildet, d.h. insbesondere, dass der gesamte, vom Generator der Windenergieanlage erzeugte Strom über den Umrichter geführt ist. Hierfür ist der Generator der Windenergieanlage bspw. als Synchrongenerator ausgeführt.

Die Steuereinheit ist zudem dazu eingerichtet, den Umrichter also solches und/oder einen Teil des Umrichters anzusteuern, wie bspw. die aktiven Gleichrichter- und/oder die Wechselrichterseite des Umrichters. Die Steuereinheit ist also sowohl für Umrichter, als auch für Gleichrichter und/oder Wechselrichter geeignet.

Bevorzugt ist die Steuereinheit dazu eingerichtet, einen aktiven Gleichrichter zu steuern, der mit dem Generator der Windenergieanlage verbunden ist, insbesondere so, dass Kraftschwankungen im Luftspalt des Generators minimiert werden.

Zum Ansteuern des Umrichters, insbesondere des aktiven Gleichrichters, umfasst die Steuereinheit wenigstens ein Primär-Steuermodul und zwei Sekundärsteuermodule.

Das Primär-Steuermodul bildet bevorzugt den Master der Steuereinheit aus.

Das Primär-Steuermodul ist insbesondere dazu eingerichtet, Vorgabe-Werte einer überlagerten Steuereinheit, wie bspw. einer Windenergieanlagensteuereinheit, zu empfangen, wie bspw. einen Leistungssollwert für den Umrichter, und diese in Soll-Werte zu wandeln, die intern in der Steuereinheit verarbeitet werden können, bspw. in Stromsollwerte für die aktiven Gleichrichter.

Das Primär-Steuermodul erzeugt also aus dem Vorgabe-Wert insbesondere einen Soll-wert, insbesondere einen Stromsollwert, für die Sekundär-Steuermodule, die in Abhängigkeit dieses Sollwertes die Umrichtermodule ansteuern.

Bevorzugt wird der Sollwert von dem Primär-Steuermodul nur an das erste Sekundär-Steuermodul übergeben. Das Primär-Steuermodul ist also den Sekundär-Steuermodulen, und insbesondere dem ersten Sekundär-Steuermodul direkt, übergelagert.

Dies bedeutet insbesondere, dass das Primär-Steuermodul innerhalb der Steuereinheit als Master ausgebildet ist und dass die Sekundär-Steuermodule innerhalb der Steuereinheit als Slave(s) ausgebildet sind.

Das erste Sekundär-Steuermodul empfängt dabei bevorzugt den Sollwert des Primär-Steuermoduls und erzeugt daraus ein erstes Steuersignal, insbesondere für einen ersten aktiven Gleichrichter eines ersten dreiphasigen Generatorsystems.

In einer bevorzugten Ausführungsform übergibt dann das erste Sekundär-Steuermodul das erste Steuersignal oder ein Signal, was eine Information über dieses erste Steuersignal umfasst, an das zweite Sekundär-Steuermodul.

Das zweite Sekundär-Steuermodul empfängt das erste Steuersignal bzw. oder das Signal, was eine Information über dieses erste Steuersignal umfasst und erzeugt daraus ein zweites Steuersignal, insbesondere für einen zweiten aktiven Gleichrichter eines zweiten dreiphasigen Generatorsystems.

Das zweite Sekundär-Steuermodul koordiniert sich also am ersten Sekundär-Steuermodul, insbesondere an dem ersten Steuersignal.

Das erste Steuersignal wird also bspw. für ein erstes Umrichtermodul, insbesondere einen ersten aktiven Gleichrichter, des Umrichters verwendet und das zweite Steuersignal wird für ein zweites Umrichtermodul, insbesondere einen zweiten aktiven Gleichrichter, des Umrichters verwendet.

Das erste Umrichtermodul und das zweite Umrichtermodul sind dabei bevorzugt an ihren Ausgängen parallel miteinander verschaltet, insbesondere so, dass die von den Umrichtermodulen erzeugten Ströme miteinander zu einem Strom überlagert werden können.

Durch die vorgeschlagene Steuereinheit, und die darin verwendete Architektur, wird eine Reduzierung von magnetischen und mechanischen Schwingungen innerhalb des Generators ermöglicht, insbesondere werden die Kräfte bzw. Kraftschwankungen im Luftspalt reduziert.

Bevorzugt wird das hierin beschriebene Verfahren für aktive Gleichrichter verwendet. Die hierin beschriebenen Umrichter weisen also wenigstens einen aktiven Gleichrichter auf oder sind als diese ausgebildet.

In einer besonders bevorzugten Ausführungsform ist der Generator 6-phasig ausgeführt und weist insbesondere zwei elektrisch, drei-phasige Systeme auf, die um 30° zueinander phasenverschoben sind. Jedes dieser Systeme ist mit einem aktiven Gleichrichter verbunden und die beiden Gleichrichter werden mittels einer vorstehend oder nachstehend beschriebenen Steuereinheit angesteuert und/oder mittels eines nachstehend beschriebenen Verfahrens angesteuert, insbesondere so, dass die Module des jeweiligen Gleichrichters im Gleichtakt arbeiten, aber die Gleichrichter zueinander versetzt getaktet sind.

Vorzugsweise ist das Primär-Steuermodul dazu eingerichtet, einen Sollwert für das erste Sekundär-Steuermodul in Abhängigkeit eines Vorgabewertes, insbesondere eines Leistungssollwertes einer Windenergieanlagensteuereinheit, zu erzeugen.

Hierfür können bspw. im Primär-Steuermodul verschiedene Funktionen hinterlegt sein, die insbesondere dazu geeignet sind, aus den Signalen der Windenergieanlagensteuereinheit Signale für die Sekundär-Steuermodule zu erzeugen. Zum Beispiel eine Funktion, die aus einem Leistungssollwert der Windenergieanlagensteuereinheit Soll-Werte, insbesondere Stromsollwerte für das Sekundär-Steuermodul erzeugt.

Vorzugsweise ist der Soll-Wert für das erste Sekundär-Steuermodul ein Stromsollwert.

Das erste Sekundär-Steuermodul erhält also von dem Primär-Steuermodul einen Stromsollwert und erzeugt aus diesem Steuersignale, insbesondere für das erste Umrichtermodul.

Vorzugsweise ist das erste Steuersignal für ein erstes elektrisches System und das zweite Steuersignal ist für ein zweites elektrisches System.

Die Steuereinheit gibt also insbesondere zwei bzw. mehrere, bevorzugt verschiedene, Steuersignale aus. Insbesondere wenigstens ein Steuersignal pro elektrisches System.

Bevorzugt ist das erste Steuersignal dabei für ein erstes elektrisches System, welches insbesondere dreiphasig ausgebildet ist und das zweite Steuersignal für ein zweites elektrisches System, welches insbesondere ebenfalls dreiphasig ausgebildet ist, insbesondere für den Generator.

Bevorzugt sind die elektrischen Systeme elektrisch identisch aufgebaut, bspw. mit drei Phasen, die jeweils 120 Grad phasenverschoben zueinander sind.

Weiter bevorzugt sind die elektrischen Systeme zueinander phasenverschoben, bspw. um 30 Grad.

Bevorzugt sind das erste elektrische Systeme und das zweite elektrische System elektrische Systeme eines, also insbesondere ein und desselben, Generators, insbesondere eines Synchrongenerators einer Windenergieanlage.

Vorzugsweise sind die Steuersignale derartig gewählt, dass die Umrichtermodule versetzt zueinander takten.

Die Umrichtermodule weisen also bspw. dieselbe Taktfrequenz auf, takten aber versetzt zu einander, insbesondere zeitlich versetzt zueinander. Dies kann bspw. durch zueinander verschobene Zündwinkel erfolgen.

In einer bevorzugten Ausführungsform takten alle Umrichtersubmodule eines jeden Umrichtermodules im Gleichtakt.

Es wird also insbesondere auch vorgeschlagen, die Umrichter bzw. Umrichtermodule bzw. Umrichtersubmodule eines jeden Systems des Generators im Gleichtakt zu betreiben und die Umrichter bzw. Umrichtermodule bzw. Umrichtersubmodule der Systeme versetzt zu einander zu takten.

Vorzugsweise kann dies dadurch erreicht werden, dass das erste Steuersignal, insbesondere für das erste Umrichtermodul, wenigstens eine Information über einen ersten Steuerwinkel umfasst, und das zweite Steuersignal, insbesondere für das zweite Umrichtermodul, wenigstens eine Information über einen zweiten Steuerwinkel umfasst, wobei der zweite Steuerwinkel zum ersten Steuerwinkel eine Phasenverschiebung aufweist.

Bevorzugt beträgt die Phasenverschiebung mehr als 170 Grad, insbesondere mehr als 180 Grad.

Weiter bevorzugt beträgt die Phasenverschiebung weniger als 250 Grad, insbesondere weniger als 240 Grad.

Besonders bevorzugt beträgt die Phasenverschiebung zwischen 200 Grad und 220 Grad, insbesondere um ca. 210 Grad.

Vorzugsweise beträgt die Phasenverschiebung 180 Grad plus einen elektrischen Winkel, wobei der elektrische Winkel die Phasenverschiebung zwischen dem ersten elektrischen System und dem zweiten elektrischen System angibt.

Die Phasenverschiebung der Steuerwinkel ist also so gewählt, dass sie die Phasenverschiebung zwischen den elektrischen Systemen berücksichtigt. Bspw. sind die elektrischen Systeme um 30 Grad phasenverschoben, dann beträgt die Phasenverschiebung der Steuerwinkel 180 Grad plus 30 Grad, also insgesamt 210 Grad.

Vorzugsweise beträgt die Phasenverschiebung im Wesentlichen ca. 210 Grad.

Vorzugsweise sind das erste Umrichtermodul und das zweite Umrichtermodul funktional als Wechselrichter oder als Gleichrichter ausgebildet, bevorzugt als aktive Gleichrichter.

Die Steuerreinheit wird also bspw. dazu verwendet einen Wechselrichter, insbesondere einen netzseitig angeordneten Wechselrichter, bevorzugt einer Windenergieanlage, anzusteuern.

Bevorzugt wird die Steuereinheit dazu verwendet einen aktiven Gleichrichter, insbesondere einen generatorseitig angeordneten, aktiven Gleichrichter, bevorzugt einer Windenergieanlage, anzusteuern.

Vorzugsweise ist das Hauptsteuermodul mit einer Windenergieanlagensteuereinheit verbindbar, insbesondere um einen Anlagensteuerwert für einen Ausgang des Umrichters zu empfangen.

Die Steuereinheit weist also wenigstens einen Eingang auf, der mit einer Windenergieanlagensteuereinheit verbunden werden kann, damit das Hauptsteuermodul mit der Windenergieanlagensteuereinheit kommunizieren kann, insbesondere um Anlagensteuerwerte zu empfangen, wie bspw. Leistungssollwert für die, in das elektrische Versorgungsnetz einzuspeisende elektrische Leistung.

Erfindungsgemäß wird ferner ein Verfahren zum Steuern eines Umrichters, bevorzugt eines Leistungsumrichters einer Windenergieanlage, vorgeschlagen, umfassend die Schritte: Vorgeben eines Sollwertes für den Umrichter; Ansteuern des Umrichters, insbesondere eines ersten Umrichtermoduls des Umrichters, mit einem ersten Steuersignal in Abhängigkeit des Sollwertes; Ansteuern des Umrichters, insbesondere eines zweiten Umrichtermoduls des Umrichters, mit einem zweiten Steuersignal in Abhängigkeit des ersten Steuersignales.

Das vorstehend oder nachstehend beschriebene Verfahren wird also bevorzugt dazu verwendet, einen Umrichter, insbesondere einen aktiven Gleichrichter, einer Windenergieanlage zu steuern, der mit einem Generator verbunden ist.

Bevorzugt ist der Generator dabei als 6-phasiger Generator, insbesondere Synchrongenerator ausgebildet, und weist zwei elektrisch dreiphasige Systeme auf, die bevorzugt um 30 Grad zu einander phasenverschoben sind.

Bevorzugt ist das Verfahren als PWM-Verfahren (engl. pulse-width modulation) ausgeführt, insbesondere als hybrides PWM-Verfahren, bspw. mit Hysteresen oder hochfrequenter Überlagerung.

Das Verfahren arbeitet also insbesondere mit Pulsmustern, bevorzugt mit einem Pulsmuster und einem modifizierten Pulsmuster, welches um einen vorbestimmten Winkel, von bspw. ca. 210 Grad verschoben ist.

Das Verfahren ermöglicht dabei insbesondere eine Reduzierung von elektrischen Oberwellen und somit von magnetischen und mechanischen Schwingungen innerhalb des Generators.

Besonders vorteilhaft bei dem Verfahren ist, dass die aktiven Gleichrichter eines jeden Systems untereinander im Gleichtakt und zueinander versetzt betrieben werden können, insbesondere so, dass das im Generator erzeugte Magnetfeld einen geringeren Ripple aufweist und es somit zu geringeren Kraftschwankungen im Luftspalt des Generators kommt, wodurch dieser deutlich geräuschärmer bzw. leiser wird.

Vorzugsweise umfasst das Verfahren ferner den Schritt: Empfangen eines Anlagensteuerwertes und optional: Vorgeben des Sollwertes für den Umrichter in Abhängigkeit des Anlagensteuerwertes.

Der Umrichter wird also bevorzugt in Abhängigkeit einer Leistungsvorgabe gesteuert, insbesondere einer Leistungsvorgabe für den Ausgang der Windenergieanlage, also für die, in ein elektrisches Versorgungsnetz einzuspeisende Leistung.

Vorzugsweise ist der Sollwert für den Umrichter ein Leistungssollwert.

Vorzugsweise ist das erste Steuersignal für ein erstes elektrisches System, bevorzugt eines Generators, und das zweite Steuersignal für ein zweites elektrisches System, bevorzugt des Generators.

Vorzugsweise umfasst das erste Steuersignal, insbesondere für das erste Umrichtermodul, wenigstens eine Information über einen ersten Steuerwinkel, und das zweite Steuersignal, insbesondere für das zweite Umrichtermodul, wenigstens eine Information über einen zweiten Steuerwinkel, wobei der zweite Steuerwinkel zum ersten Steuerwinkel eine Phasenverschiebung aufweist.

Vorzugsweise beträgt die Phasenverschiebung 180 Grad plus einen elektrischen Winkel, wobei der elektrische Winkel die Phasenverschiebung zwischen dem ersten elektrischen System und dem zweiten elektrischen System angibt.

Vorzugsweise beträgt die Phasenverschiebung ca. 210 Grad.

Vorzugsweise sind das erste Steuersignal und das zweite Steuersignal für ein PWM-Verfahren vorgesehen.

Der Umrichter wird dabei bevorzugt mit einer Puls-Weiten-Modulation (PWM) angesteuert.

Erfindungsgemäß wird ferner eine Windenergieanlage vorgeschlagen, umfassend: einen Umrichter, der als Leistungsumrichter ausgebildet ist und weist eine vorstehend oder nachstehend beschriebene Steuereinheit auf und/oder wird mit einem vorstehend oder nachstehend beschriebenen Verfahren gesteuert.

Vorzugsweise ist der Umrichter als Vollumrichter ausgebildet.

Die gesamte vom Generator der Windenergieanlage erzeugte elektrische Leistung wird also über den Umrichter geführt.

Der Generator ist hierfür bspw. als Synchrongenerator oder wie nachstehend beschrieben ausgeführt.

Vorzugsweise umfasst die Windenergieanlage einen Generator mit einem ersten und einem zweiten elektrisch-dreiphasigen System, wobei der Umrichter ein erstes Umrichtermodul für das erste elektrisch-dreiphasige System aufweist und ein zweites Umrichtermodul für das zweite elektrisch-dreiphasige System aufweist; wobei das erste Umrichtermodul eine Vielzahl von Umrichtersubmodulen aufweist und das zweite Umrichtermodul eine Vielzahl von Umrichtersubmodulen aufweist, wobei die Vielzahl von Umrichtersubmodulen des ersten Umrichtermoduls in einem ersten Gleichtakt betrieben werden; und die Vielzahl von Umrichtersubmodulen des zweiten Umrichtermoduls in einem zweiten Gleichtakt betrieben werden; wobei der erste Gleichtakt asynchron zum zweiten Gleichtakt ist.

Es wird also insbesondere auch vorgeschlagen, den Generator der Windenergieanlage mit zwei elektrisch-dreiphasigen Systemen auszustatten, die bevorzugt elektrisch um 30 Grad zueinander verschoben sind.

Zudem wird auch vorgeschlagen, die Umrichtermodule bzw. Umrichtersubmodule eines elektrischen Systems synchron zueinander zu takten, aber die Umrichtermodule bzw. Umrichtersubmodule verschiedener elektrischer Systeme asynchron zueinander zu takten.

Die vorliegende Erfindung wird nun nachfolgend anhand der begleitenden Figuren näher erläutert, wobei für gleiche oder ähnliche Bauteile oder Baugruppen dieselben Bezugszeichen verwendet werden.
- Fig. 1: zeigt schematisch und exemplarisch eine perspektivische Ansicht einer Windenergieanlage in einer Ausführungsform.
- Fig. 2: zeigt schematisch und exemplarisch einen Aufbau eines elektrischen Stranges einer Windenergieanlage in einer Ausführungsform.
- Fig. 3: zeigt schematisch und exemplarisch den Aufbau eines Umrichters.
- Fig. 4: zeigt schematisch und exemplarisch den Aufbau einer Steuereinheit eines Umrichters.
- Fig. 5: zeigt schematisch und exemplarisch den Ablauf eines Verfahren zum Steuern eines Umrichters.

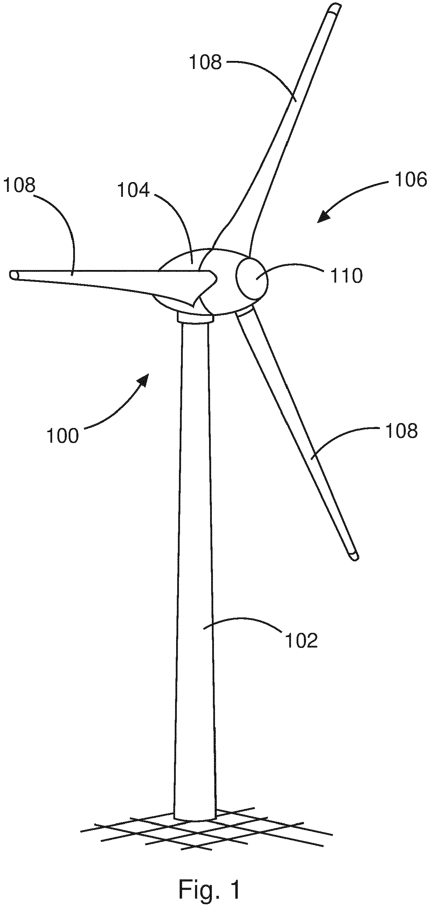

Fig. 1 zeigt eine perspektivische Ansicht einer Windenergieanlage 100.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der Rotor 106 wird im Betrieb durch den Wind in eine Drehbewegung versetzt und treibt dadurch einen Generator in der Gondel an.

Der Generator erzeugt hierdurch einen 6-phasigen Strom, der mittels eines aktiven Gleichrichters gleichgerichtet wird.

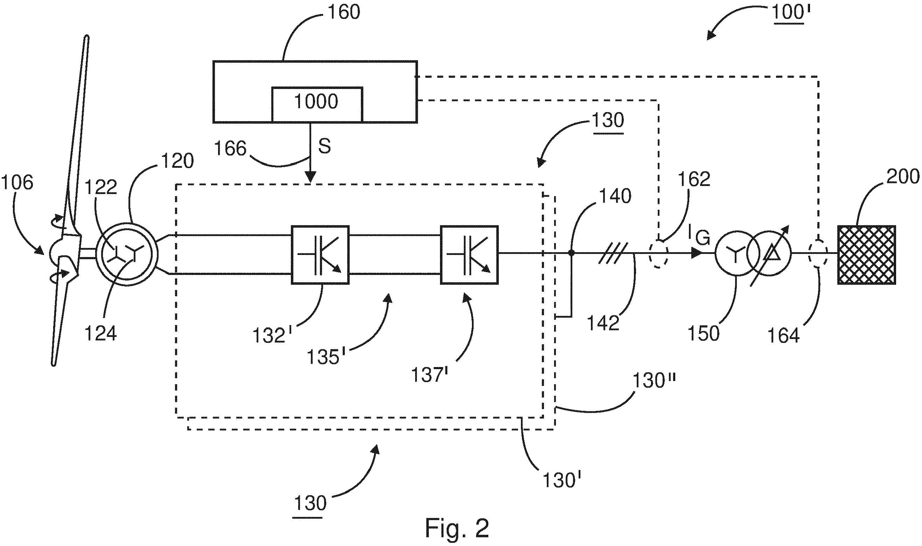

Fig. 2 zeigt schematisch und exemplarisch einen elektrischen Strang 100' einer Windenergieanlage 100, wie bevorzugt in Figur 1 gezeigt.

Der aerodynamische Rotor der Windenergieanlage 106 ist mit dem Generator 120 der Windenergieanlage verbunden. Bevorzugt ist der Generator 120 dabei als sechsphasiger Generator ausgebildet, bspw. weist der Generator zwei statorseitig voneinander entkoppelte, elektrisch dreiphasige Systeme 122, 124 auf, die um 30 Grad phasenverschoben sind.

Der Generator 120 ist über einen Umrichter 130 und mittels eines Transformators 150 mit einem elektrischen Versorgungsnetz 200 verbunden bzw. an das elektrische Versorgungsnetz 200 angeschlossen.

Um die vom Generator 120 erzeugte elektrische Leistung in einen einzuspeisenden Strom i_{G} umzuwandeln, weist der Umrichter 130 für jedes der elektrischen Systeme 122, 124 jeweils ein Umrichtermodul 130', 130" auf, wobei die Umrichtermodule 130', 130" im Wesentlichen baugleich ausgeführt sind.

Die Umrichtermodule 130', 130" weisen an einem Umrichtermoduleingang einen aktiven Gleichrichter 132' auf. Der aktive Gleichrichter 132' st elektrisch mit einem Wechselrichter 137' verbunden, bspw. über eine Gleichspannungsleitung 135' oder einen Gleichspannungszwischenkreis. Bevorzugt ist der Umrichter 130 bzw. sind die Umrichtermodule 130', 130" als Direkt-Umrichter (engl. back-to-back converter) ausgeführt.

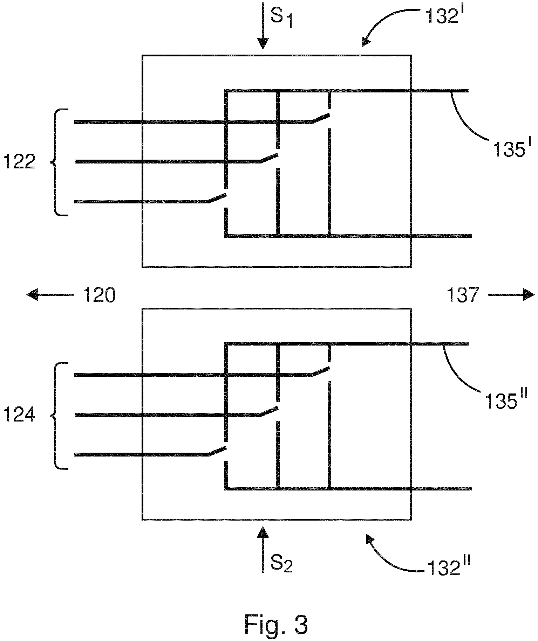

Die Funktionsweise der aktiven Gleichrichter 132', 133" des Umrichters 130 ist insbesondere in Fig. 3 näher erläutert.

Die zwei statorseitig voneinander entkoppelten, elektrisch-dreiphasigen Systeme 122, 124 werden netzseitig an einem Knotenpunkt 140 zu einem dreiphasigen Gesamtsystem 142 zusammengeführt.

Um den einzuspeisenden Gesamtstrom i_{G} in das elektrische Versorgungnetz 200 einzuspeisen, ist ferner am Ausgang der Windenergieanlage ein Windenergieanlagentransformator 150 vorgesehen, der bevorzugt im Stern-Dreieck geschaltet ist und die Windenergieanlage 100 mit dem elektrischen Versorgungsnetz 200 verbindet.

Das elektrische Versorgungsnetz 200, an das die Windenergieanlage 100, 100' mittels des Transformators 150 angeschlossen ist, kann beispielsweise ein Windparknetz oder ein elektrisches Versorgungs- oder Verteilnetz sein.

Zum Steuern der Windenergieanlage 100 bzw. des elektrischen Stranges 100' ist ferner eine Windenergieanlagensteuereinheit 160 vorgesehen.

Die Windenergieanlagensteuereinheit 160 ist dabei insbesondere dazu eingerichtet, einen einzuspeisenden Gesamtstrom i_{G} einzustellen, insbesondere durch Ansteuern der aktiven Gleichrichter 132', 132" bzw. Wechselrichter 137', 137".

Die Windenergieanlagensteuereinheit 160 ist bevorzugt auch dazu eingerichtet, den Gesamtstrom i_{G} mittels eines Stromerfassungsmittels 162 zu erfassen. Bevorzugt werden hierfür insbesondere die Ströme eines jeden Umrichtermoduls 137' in jeder Phase erfasst.

Zudem weist die Steuereinheit auch Spannungserfassungsmittel 164 auf, die dazu eingerichtet sind, eine Netzspannung, insbesondere des elektrischen Versorgungnetzes 200, zu erfassen.

In einer besonders bevorzugten Ausführungsform ist die Windenergieanlagensteuereinheit 160 zudem dazu eingerichtet, auch den Phasenwinkel und die Amplitude des einzuspeisenden Stromes i_{G} zu erfassen.

Die Windenergieanlagensteuereinheit 160 umfasst zudem eine vorstehend oder nachstehend beschriebene Steuereinheit 1000 für den Umrichter 130.

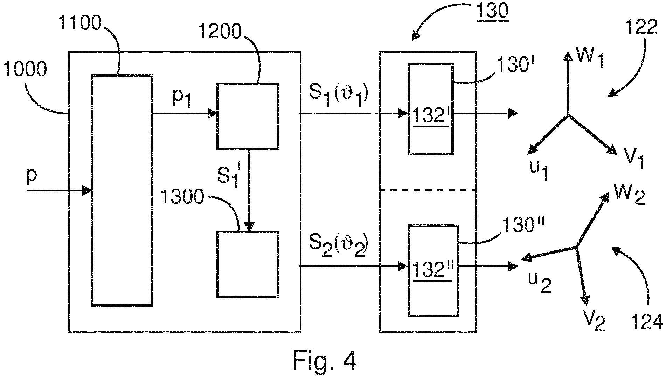

Die Steuereinheit 1000 ist also insbesondere eingerichtet, den gesamten Umrichter 130 mit seinen zwei Umrichtermodulen 130', 130" mit ihren jeweiligen Umrichtersubmodulen, insbesondere wie in Fig. 4 gezeigt, mit (Schalt-)Signalen S zu steuern.

Fig. 3 zeigt schematisch und exemplarisch den Aufbau eines Umrichters 130, insbesondere der aktiven Gleichrichter 132', 132" wie in Fig. 2 gezeigt.

Der Umrichter 130 umfasst dabei insbesondere zwei aktive Gleichrichter 132', 132". Einen ersten aktiven Gleichrichter 132' für das erste elektrisch, dreiphasige System 122 und einen zweiten aktiven Gleichrichter 132" für das zweite elektrisch, dreiphasige System 124.

Die aktiven Gleichrichter 132', 132" sind generatorseitig an das jeweilige System 122, 124 des Generators angeschlossen und über die Gleichspannung 135 mit einem Wechselrichter 137', 137" verbunden, wie insbesondere in Fig. 2 gezeigt.

Die aktiven Gleichrichter 132', 132" werden jeweils mit Schaltsignalen S1, S2 durch die vorstehend oder nachstehend beschriebenenen Steuereinheit 1000 angesteuert.

Fig. 4 zeigt schematisch und exemplarisch den Aufbau einer Steuereinheit 1000 eines Umrichters 130.

Der Umrichter 130, der bspw. als Leistungsumrichter einer Windenergieanlage ausgebildet ist, umfasst zwei Umrichtermodule 130', 130", wobei jedes Umrichtermodul 130', 130" jeweils ein dreiphasiges Wechselstromsystem 122, 124 mit den Phasen u₁, v₁, w₁ bzw. u₂, v₂, w₂ aufweist, die vom Generator 120 erzeugt werden, und insbesondere 30 Grad phasenverschoben sind.

Jedes Umrichtermodul 130', 130" umfasst wenigstens einen aktiven Gleichrichter 132', 132", wie bspw. in Fig. 3 gezeigt.

Der Umrichter 130 wird über eine Steuereinheit 1000 angesteuert, bspw. mit einem ersten Signal S1(ϑ1) für den ersten 'aktiven Gleichrichter 132' und einem zweiten Signal S2(ϑ2) für den zweiten aktiven Gleichrichter 132".

Die Steuereinheit 1000 umfasst ein Primär-Steuermodul 1100, ein erstes Sekundär-Steuermodul 1200 und ein zweites Sekundär-Steuermodul 1300.

Das Primär-Steuermodul 1100 ist das Hauptsteuermodul (master) der Steuereinheit 1000 und dazu eingerichtet, einen Vorgabe-Wert, insbesondere einen Leistungs-Sollwert P, der Windenergieanlagensteuereinheit zu empfangen und daraus den Soll-Wert p1, bspw. einen Stromsollwert, für die Sekundär-Steuermodule 1100, 1200 zu erzeugen.

Die Sekundär-Steuermodule 1100, 1200 sind also insbesondere dem Primär-Steuermodul 1100 unterlagert (slave).

Das erste Sekundär-Steuermodul 1200 ist dazu eingerichtet, den Soll-Wert p1 des Primär-steuermoduls 1100 zu empfangen und daraus ein Steuersignal S1 zu erzeugen., bspw. ein Pulsmuster.

Das Steuersignal S1 wird also dazu verwendet, das erste Umrichtermodul 130' anzusteuern bzw. wird an das zweite Sekundär-Steuermodul 1300 übergeben.

Das zweite Sekundär-Steuermodul 1300 ist also dem ersten Sekundär-Steuermodul 1200 unterlagert bzw. koordiniert sich an diesem.

Das erste Sekundär-Steuermodul 1200 empfängt zum Erzeugen des ersten Steuersignals S1 also den Soll-Wert p1 des Primär-Steuermoduls 1100.

Das zweite Sekundär-Steuermodul 1300 empfängt hingegen das erste Steuersignal S1, um das zweite Steuersignal S2, bspw. ein modifiziertes Pulsmuster, zu erzeugen.

Bevorzugt umfassen die Steuersignale S1, S2 wenigstens einen Winkel 9, bevorzugt einen Zündwinkel für die Umrichtermodule 130', 130" bzw. Umrichtersubmodule 137', 137", 137'".

Derartige Winkel 91, ϑ2 können auch als Steuerwinkel bezeichnet werden.

Die Steuersignale S1, S2 bzw. die Steuerwinkel 91, ϑ2 werden dabei so bestimmt, dass die Schalter der aktiven Gleichrichter 132', 132" der jeweiligen Umrichtermodule 130', 130" im gleichen takten, aber die Schalter der Umrichtermodule 130', 130" zu einander versetzt takten.

Dies bedeutet insbesondere, dass die Umrichtermodule 130', 130" ein versetztes Takten aufweisen.

Dies kann bspw. dadurch erreichten werden, dass die Steuerwinkel ϑ1, ϑ2 eine Phasenverschiebung zueinander aufweisen, bspw. von 210°. Es gilt also ϑ1 plus 210 Grad gleich ϑ2.

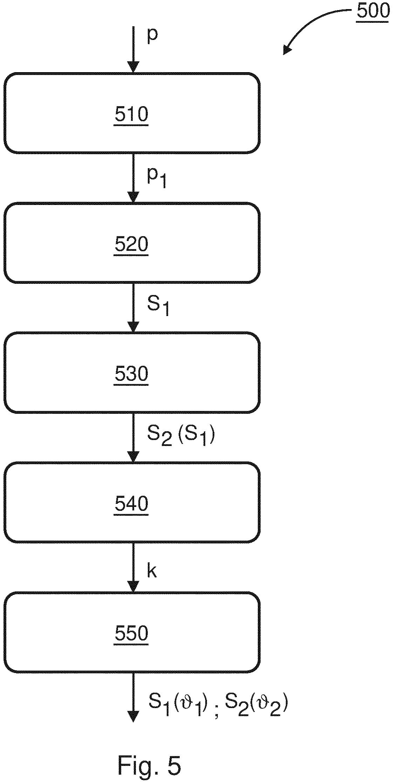

Fig. 5 zeigt schematisch und exemplarisch den Ablauf 500 eines Verfahren zum Steuern eines Umrichters, insbesondere mittels einer vorstehend beschriebenen Steuereinheit.

In einem ersten Schritt 510 wird ein Stromsollwert p1 für die Systeme 122, 124 bestimmt, bspw. in Abhängigkeit eines Leistungssollwertes, der von einer Windenergieanlagensteuereinheit empfangen wurde.

In einem nächsten Schritt 520 wird aus diesem Stromsollwert p1 ein erstes Steuersignal S1 für den ersten aktiven Gleichrichter 132' des ersten Systems 122 bestimmt.

In einem weiteren Schritt 530 wird in Abhängigkeit dieses ersten Steuersignals S1 ein zweites Steuersignal für den zweiten aktiven Gleichrichter 132" des zweiten Systems 124 bestimmt.

In einem nächsten Schritt 540 werden die so bestimmten Steuersignale S1, S2 mittels eines Korrekturwertes k korrigiert, insbesondere, wenn nötig.

In einem weiteren Schritt 550 werden die aktiven Gleichrichter 132', 132" dann in Abhängigkeit von Schaltwinkeln ϑ₁, ϑ₂ und mittels der Schaltsignale S1, S2 angesteuert, bspw. mittels einer PWM-Modulation und/oder eines Toleranzbandverfahrens.

### Bezuqszeichenliste

- 100: Windenergieanlage
- 100': elektrischer Strang, insbesondere der Windenergieanlage
- 100": Ausschnitt des elektrischen Stranges
- 102: Turm, insbesondere der Windenergieanlage
- 104: Gondel, insbesondere der Windenergieanlage
- 106: Rotor, insbesondere der Windenergieanlage
- 180: Rotorblatt, insbesondere der Windenergieanlage
- 120: Generator, insbesondere der Windenergieanlage
- 122: erstes elektrisches System, insbesondere des Generators
- 124: zweites elektrisches System, insbesondere des Generators
- 130: Umrichter, insbesondere der Windenergieanlage
- 130': Umrichtermodul, insbesindere für das erste elektrische System
- 130": Umrichtermodul, insbesondere für das zweite elektrische System
- 132: Umrichtersubmodul, insbesondere aktiver Gleichrichter
- 132': Umrichtersubmodul, insbesondere aktives Gleichrichtermodul
- 132": Umrichtersubmodul, insbesondere aktives Gleichrichtermodul
- 135: Gleichspannung
- 137: Umrichtersubmodul, insbesondere Wechselrichter
- 137': Umrichtersubmodul, insbesondere Wechselrichtermodul
- 137": Umrichtersubmodul, insbesondere Wechselrichtermodul
- 140: Knotenpunkt
- 142: dreiphasiges (Gesamt-)System
- 150: Transformator
- 160: Windenergieanlagensteuereinheit
- 200: elektrisches Versorgungsnetz

- 1000: Steuereinheit
- 1100: Primär-Steuermodul
- 1200: erstes Sekundär-Steuermodul
- 1300: zweites Sekundär-Steuermodul

- i_{G}: einzuspeisender Gesamtstrom
- U_{DC}: Gleichspannung eines Gleichspannungszwischenkreises
- u: Spannung einer Phase
- i: Strom einer Phase
- S: (Schalt-)Signal

- P: (Leistungs-)Soll-Wert, insbesondere der Windenergieanlagensteuereinheit
- p1: Soll-Wert

- u, v, w: Phasen, insbesondere eines dreiphasigen Systems
- ϑ: Schaltwinkel
- 1,2,3: Indizes

## Patentansprüche

1. Steuereinheit (1000) für einen Umrichter (130), bevorzugt eines Leistungsumrichters einer Windenergieanlage (100), insbesondere eines aktiven Gleichrichters eines Leistungsumrichters einer Windenergieanlage (100), umfassend:
- ein Primär-Steuermodul (1100) zum Vorgeben eines Sollwertes (p1) für den Umrichter (200),
- ein erstes Sekundär-Steuermodul (1200) zum Ansteuern des Umrichters (130), insbesondere eines ersten Umrichtermoduls (130') des Umrichters (130), das dazu eingerichtet, ein erstes Steuersignal (S1) in Abhängigkeit des Sollwertes (p1) zu erzeugen;
- ein zweites Sekundär-Steuermodul (1300) zum Ansteuern des Umrichters (130), insbesondere eines zweiten Umrichtermoduls (130") des Umrichters (130), welches zum ersten Umrichtermodul (130') parallel verschaltet ist, das dazu eingerichtet ist, ein zweites Steuersignal (S2) in Abhängigkeit des ersten Steuersignales (S1) zu erzeugen.

2. Steuereinheit (1000) für einen Umrichter (130) nach Anspruch 1, wobei
- das Primär-Steuermodul (1100) dazu eingerichtet ist, einen Sollwert (p1) für das erste Sekundär-Steuermodul (1200) in Abhängigkeit eines Vorgabewertes (P), insbesondere eines Leistungssollwertes einer Windenergieanlagensteuereinheit, zu erzeugen.

3. Steuereinheit (1000) für einen Umrichter (130) nach Anspruch 1 oder 2, wobei
- der Soll-Wert (p1) für das erste Sekundär-Steuermodul (1200) ein Stromsollwert ist.

4. Steuereinheit (1000) für einen Umrichter (130) nach wenigstens einem der vorstehenden Ansprüche, wobei
- das erste Steuersignal (S1) für ein erstes elektrisches System (u₁, v₁, w₁) ist; und
- das zweite Steuersignal (S2) für ein zweites elektrisches System (u₂, v₂, w₂) ist.

5. Steuereinheit (1000) für einen Umrichter (130) nach wenigstens einem der vorstehenden Ansprüche, wobei
- Steuersignale (S1, S2) derartig gewählt sind, dass die Umrichtermodule (130', 130") versetzt zueinander takten.

6. Steuereinheit (1000) für einen Umrichter (130) nach wenigstens einem der vorstehenden Ansprüche, wobei
- das erste Steuersignal (S1), insbesondere für das erste Umrichtermodul (130'), wenigstens eine Information über einen ersten Steuerwinkel (ϑ₁) umfasst, und
- das zweite Steuersignal (S2), insbesondere für das zweite Umrichtermodul (130"), wenigstens eine Information über einen zweiten Steuerwinkel (ϑ₂) umfasst, wobei
- der zweite Steuerwinkel (ϑ₂) zum ersten Steuerwinkel (ϑ₁) eine Phasenverschiebung aufweist.

7. Steuereinheit (1000) für einen Umrichter (130) nach Anspruch 5, wobei
- die Phasenverschiebung 180 Grad plus einen elektrischen Winkel (β) beträgt, wobei der elektrische Winkel (β) die Phasenverschiebung zwischen dem ersten elektrischen System (122) und dem zweiten elektrischen System (124) angibt.

8. Steuereinheit (1000) für einen Umrichter (130) nach Anspruch 5, wobei
- die Phasenverschiebung ca. 210 Grad beträgt.

9. Steuereinheit (1000) für einen Umrichter (130) nach wenigstens einem der vorstehenden Ansprüche, wobei
- das erste Umrichtermodul (130') und das zweite Umrichtermodul (130") funktional als Wechselrichter oder als Gleichrichter ausgebildet sind, bevorzugt als aktive Gleichrichter.

10. Steuereinheit (1000) für einen Umrichter (130) nach wenigstens einem der vorstehenden Ansprüche, wobei
- das Hauptsteuermodul (1100) mit einer Windenergieanlagensteuereinheit (160) verbindbar ist, insbesondere um einen Anlagensteuerwert (P) für einen Ausgang des Umrichters (137) zu empfangen.

11. Verfahren zum Steuern eines Umrichters (130), bevorzugt eines Leistungsumrichters einer Windenergieanlage (100), umfassend die Schritte:
- Vorgeben eines Sollwertes (p1) für den Umrichter (200);
- Ansteuern des Umrichters (130), insbesondere eines ersten Umrichtermoduls (130') des Umrichters (130), mit einem ersten Steuersignal (S1) in Abhängigkeit des Sollwertes (p1);
- Ansteuern des Umrichters (130), insbesondere eines zweiten Umrichtermoduls (130") des Umrichters (130), mit einem zweiten Steuersignal (S2) in Abhängigkeit des ersten Steuersignales (S1).

12. Verfahren zum Steuern eines Umrichters (130) nach Anspruch 11, ferner umfassend den Schritt:
- Empfangen eines Anlagensteuerwertes (P) und
- optional: Vorgeben des Sollwertes (p1) für den Umrichter (200) in Abhängigkeit des Anlagensteuerwertes (P).

13. Verfahren zum Steuern eines Umrichters (130) nach Anspruch 11 oder 12, wobei
- der Sollwert (p1) für den Umrichter (130) ein Leistungssollwert ist.

14. Verfahren zum Steuern eines Umrichters (130) nach wenigstens einem der Ansprüche 11 bis 13, wobei
- das erste Steuersignal (S1) für ein erstes elektrisches System (u1, v1, w1), bevorzugt eines Generators, ist; und
- das zweite Steuersignal (S2) für ein zweites elektrisches System (u2, v2, w2), bevorzugt des Generators, ist.

15. Verfahren zum Steuern eines Umrichters (130) nach wenigstens einem der Ansprüche 11 bis 14, wobei
- das erste Steuersignal (S1), insbesondere für das erste Umrichtermodul (130'), wenigstens eine Information über einen ersten Steuerwinkel (ϑ₁) umfasst, und
- das zweite Steuersignal (S2), insbesondere für das zweite Umrichtermodul (130"), wenigstens eine Information über einen zweiten Steuerwinkel (ϑ₂) umfasst, wobei
- der zweite Steuerwinkel (ϑ₂) zum ersten Steuerwinkel (ϑ₁) eine Phasenverschiebung aufweist.

16. Verfahren zum Steuern eines Umrichters (130) nach Anspruch 15, wobei
- die Phasenverschiebung 180 Grad plus einen elektrischen Winkel (β) beträgt, wobei der elektrische Winkel (β) die Phasenverschiebung zwischen dem ersten elektrischen System (122) und dem zweiten elektrischen System (124) angibt.

17. Verfahren zum Steuern eines Umrichters (130) nach Anspruch 16, wobei
- die Phasenverschiebung ca. 210 Grad beträgt.

18. Verfahren zum Steuern eines Umrichters (130) nach wenigstens einem der Ansprüche 11 bis 17, wobei
- das erste Steuersignal (S1) und das zweite Steuersignal (S2) für ein PWM-Verfahren vorgesehen sind.

19. Windenergieanlage (100), umfassend:
- einen Umrichter (130), der als Leistungsumrichter ausgebildet ist und
- eine Steuereinheit (1000) nach einem der Ansprüche 1 bis 10 aufweist und/oder
- mit einem Verfahren nach einem der Ansprüche 11 bis 18 gesteuert wird.

20. Windenergieanlage (100) nach Anspruch 19, wobei
- der Umrichter (130) als Vollumrichter ausgebildet ist, aufweisend:
- ein erstes Umrichtermodul (130') für ein erstes dreiphasiges System (122), und
- ein zweites Umrichtermodul (130") für ein zweites dreiphasiges System (124), wobei
- das zweite Umrichtermodul (130") parallel zum ersten Umrichtermodul (130') verschaltet ist und das erste dreiphasige System (122) und das zweite dreiphasige System (124) zu einem dritten dreiphasigen System überlagert werden.

21. Windenergieanlage (100) nach Anspruch 19 oder 20, ferner umfassend:
- einen Generator (120) mit einem ersten und einem zweiten elektrisch-dreiphasigen System (124), wobei
- der Umrichter (130):
- ein erstes Umrichtermodul (130') für das erste elektrisch-dreiphasige System (122) aufweist und
- ein zweites Umrichtermodul (130") für das zweite elektrisch-dreiphasige System (124) aufweist; wobei
- das erste Umrichtermodul (130') eine Vielzahl von Umrichtersubmodulen (132) aufweist und
- das zweite Umrichtermodul (124) eine Vielzahl von Umrichtersubmodulen (132) aufweist, wobei
- die Vielzahl von Umrichtersubmodulen (132) des ersten Umrichtermoduls (130') in einem ersten Gleichtakt (f(ϑ1)) betrieben werden; und
- die Vielzahl von Umrichtersubmodulen (132) des zweiten Umrichtermoduls (130") in einem zweiten Gleichtakt (f(ϑ2)) betrieben werden; wobei
- der erste Gleichtakt asynchron (ϑ2≠ϑ1) zum zweiten Gleichtakt ist.
